# EUROPEAN PATENT SPECIFICATION

(11) **EP 2 859 259 B1**
(45) Date of publication and mention of the grant of the patent: **13.07.2016**
(21) Application number: 13730359.0
(22) Date of filing: 14.05.2013
(51) Int. Cl.: F16K 15/04, F16K 1/14, F16K 1/42

(54) **FLOW REDUCER FOR ADJUSTING CONDENSATE DISCHARGE OF HIGH PRESSURE COMPRESSORS**
DURCHFLUSSBEGRENZER ZUR EINSTELLUNG DER KONDENSATABFÜHRUNG VON HOCHDRUCKVERDICHTER
RÉDUCTEUR DE DÉBIT PERMETTANT DE RÉGLER LE REFOULEMENT DU CONDENSAT DE COMPRESSEURS HAUTE PRESSION

(30) Priority: 06.06.2012 IT PD20120182
(43) Date of publication of application: 15.04.2015
(73) Proprietor: Nardi Compressori S.r.l., 36075 Montecchio Maggiore (VI) (IT)
(72) Inventor: GHIOTTO, Marco, I-36075 Montecchio Maggiore (VI) (IT)
(74) Representative: Contadin, Giorgio
(86) International application number: PCT/IB2013/053906
(87) International publication number: WO 2013/182925

(56) References cited:
- EP-A1- 1 808 624
- DE-A1-102009 027 839
- US-A- 3 901 475
- US-A- 5 791 374
- US-A1- 2008 178 948
- US-A1- 2009 166 575

## Description

The present invention concerns an innovative flow reducer for adjusting or controlling condensate discharge of high pressure compressors, typically and illustratively operating at values in the range of 200÷600 bar in order to generate, for example, breathable compressed air, usable in cylinders for industrial, military, underwater and/or aid uses and, therefore, in the field of diving, submariner, aeronautics, rescue or intervention services (performed for instance by the fire brigade or special teams of first intervention) in even logistically hostile environments, such as mining.

The flow reducer of the invention can be, in any case, used for the adjustment of condensate discharge of any high pressure compressor of industrial application: in this respect, purely by way of example, compressors for the production of high pressure nitrogen are cited intended for example to be used in machines for laser-cutting metal sheet, compressors for the production of high pressure methane for traction, compressors for the production of high pressure gas in the field of fruit preservation (for example apples) and even more.

As known, compressors are operating machines of pneumatic type properly intended to raise the pressure of a gas, such as for instance air, through the use of mechanical energy.

Compressors are mainly classified into two large families, the first one of which includes volumetric compressors, in which gas compression is given by well-defined mechanical movements, the second one of which instead includes dynamic compressors, in which gas compression comes from the speed that can be impressed on the body.

A particular category of these operating machines with pneumatic functioning notoriously consists of compressors for breathable air or for diving activities cylinders, which combine traditional features of an air compressor with filtering and dehumidification systems.

Indeed, in this type of compressors, as well as in all the other categories of high pressure compressors, during operation a rather large amount of water, emulsified with parts of lubricating oil, generates; hence, it is necessary to handle, minimizing their negative effects, crucial issues such as accumulation of water in the cylinders and possible pollution of the compressed air and consequent poisoning for people who have to eventually breathe it.

In order to eliminate residual impurities of oil in the air, the compressed air (or other gas in further and different industrial applications) to be intended to the cylinders is previously filtered and deodorized by passing in one or more filters, for example of the type of layers of granules of molecular separator and activated carbon, in such a way as to make it perfectly clean, odorless, dry and thus breathable.

Furthermore, in order to avoid that the air (or other gas in additional and different industrial applications) to be intended to the cylinders also contains only a small amount of water or condensate, which inevitably develops during compression of air and which is generally constituted for the 99% by water and for 1% by air (or other gas involved), the breathable air compressors comprise a discharge line of the condensate which, after passage through a filter of separation of the oil parts emulsified in it, it is expelled and collected in suitable external containers or tanks.

Breathable air compressors of the prior art are divided into two main constructive models, namely the compressors that supply air at low pressure, about 30 Atm, on one side, and the compressors that supply air at high pressure, of the order of 200÷300 bar even up to more than 1,000 bars in the models of the last generation, on the other side.

There are also on the market compressors called "oil free", because they use special devices which allow lubrication thereof without using oils with the aim of eliminating those problems of possible toxicity of the air and those additional problems in case the particles of oil emulsified are distributed sprayed in hyperbaric environments.

Prior art documents published as US5,791,374 A, DE102009027839 A1, US2009/166575 A1 and EP1808624 A1 disclose examples of known compressors referring to the claimed invention, especially document US5,791,374 A which is related as the most relevant one. The present invention relates in particular to the high pressure compressors for the treatment of a generic natural gas (such as air, helium, nitrogen, methane and so on) and, namely, to the system of discharge of the condensate produced by such compressors during normal operation which, as now conceived, presents some recognized and acclaimed drawbacks. For these specific compressors, condensate discharge must be carefully designed and carried out, due to the high pressures in play: as said, indeed, the condensate also contains air that is at a high pressure (typically at values not lower than 200÷300 bar up to over 1,000 bar) and is therefore rather clear how the phase of its discharge into the outer container of storage should be done with the utmost care and caution and by providing constructive and functional measures which are also able to avoid irreparable damages to the equipment and appliances involved, particularly the outer container of storage itself.

The drawback that negatively marks all the high pressure compressors of known type concerned is linked to the fact that discharge of condensate occurs in an excessively violent and rapid manner, and is substantially devoid of an adequate and slightest flow adjustment. The first negative consequence of this operative situation is the need to design with extreme accuracy external containers of storage which are still expensive, since they, in a very limited period of time, must be able to effectively and reliably receive a flow of condensate that reaches them with minimum control, as it was literally "shot" inside them, due to the high pressure at which the condensate finds itself at the compressor outlet.

A second negative consequence of the aforementioned situation, determined by the current operation of the high pressure compressors for the production of gas of various nature and application, is the generation of a rather inefficient discharge phase of the percentage of water contained in the condensate.

Indeed, in the high pressure compressors of the prior art gas (e.g. air) contained in the condensate - as compressible - is discharged before water - not compressible if compared to any gas - wherefore in the current technique it is found that water of the condensate produced by such compressors starts flowing out only at the end of discharge phase, when the pressure value is inevitably decreased, until reaching a value near zero: it is understood how, in this way, it is possible to totally discharge the aqueous part contained in the condensate only against a virtually complete waste of the gaseous pressure part, which could be otherwise conveniently intended to the industrial use for which it has been produced.

In similar conditions, moreover, the discharge of the condensate that is produced in the high pressure compressors of the known type is rather noisy, with the obvious environmental inconvenience that this entails.

Starting therefore from the knowledge of the drawbacks outlined above of the current state of the art, the present invention seeks to give them an accomplished and effective remedy.

Firstly, main purpose of the present invention is to provide a flow reducer for adjusting condensate discharge of high pressure compressors which thus allows to effectively and reliably adjust the flow of condensate which, due to the high pressure at which it states, is directed to any external container of storage.

Otherwise said, main purpose of the invention is to devise a flow reducer for adjusting condensate discharge of high pressure compressors which allows the condensate itself to reach in a gradual but effective manner the outer container of storage arranged downstream the compressor itself.

Within the abovementioned purpose, it is a first task of the invention to develop a flow reducer for adjusting condensate discharge of high pressure compressors which allows to conceive a construction of the external container of storage, and equipment connected with it, which is less complex and critical, from a technological point of view, and less costly, from an economic point of view, than the state of the art.

It is another task of the present invention to provide a flow reducer for adjusting condensate discharge of high pressure compressors which determines in the unit of time a discharge of the aqueous part, contained in the condensate produced by the same high pressure compressors, more efficient and inexpensive than the known technique, dispersing a quantity of compressed gas (such as air) considerably lower than what happens with the current techniques or methodologies.

It is a further task of the invention to limit compared with the prior art the noise level during the discharging phase of the condensate coming from high pressure compressors and intended to containers or tanks of discharge and/or storage.

It is a last but not least purpose of the present invention to create a flow reducer for adjusting condensate discharge of high pressure compressors which has simple construction and does not negatively affect manufacturing and installation costs of the overall architecture of the system of discharge of the condensate produced by the aforesaid high pressure compressors. The aforesaid purposes are achieved through a flow reducer for adjusting condensate discharge of high pressure compressors according to claim 1 attached hereto, as hereinafter referred for the sake of exhibition brevity.

Further technical details of the flow reducer of the invention are contained in the corresponding dependent claims.

The abovementioned claims, hereinafter specifically and concretely defined, are considered integral part of the present description.

Advantageously, the flow reducer of the present invention allows to choke the flow of condensate from the high pressure compressor to the external container of storage, limiting the flow thereof in comparison with the solutions currently adopted.

This thanks to the simultaneous presence of at least one surface incision in the annular strike element and the valve means, movable inside the tubular body and interfering with the annular abutment itself when they assume the operating position, during the phase of condensate discharge.

In this way, therefore, the condensate to be discharged is forced to pass only through one or more surface incisions formed in the annular strike element, so that, in the discharging phase, condensate is substantially leaked out or drawn and its flow is considerably slowed down compared to the known technique.

Still advantageously, contrary to the techniques adopted in the prior art, the flow reducer of the invention also allows the complete discharge of the aqueous part of the condensate produced by a high pressure compressor, since condensate discharge speed is drastically reduced and gas (e.g. air) is no longer able to forestall the water during the discharge phase. Therefore, the innovative flow reducer of the invention facilitates discharge of the first part of the aqueous condensate and only later, or at the most at the same time, also of the gaseous part of the condensate itself, to all the advantage of the overall efficiency of the operation. Indeed, the complete discharge of the aqueous part of the condensate in the initial phase of the process allows to disperse a quantity of compressed gas much lower than what occurs with known discharge systems, thus determining the possibility to recover a good part of compressed gas currently irreparably dispersed.

Equally advantageously, the reduction of the flow of condensate produced by the high pressure compressor during its discharge phase allows to provide for the external container of strorage constructive features - in terms of the materials used, shape, capacity and size - more simpler and more usual than those ones required by the prior art, the external container while keeping unchanged its functional efficiency and resulting suitable to the industrial application concerned.

In advantageous manner, furthermore, the flow reducer of the invention eliminates or severely restricts compared to the prior art the noise level during discharge phase of the condensate produced by the high pressure compressors and intended to external containers of storage, with the obvious benefits for the health of the professionals who work in the environment in which these compressors are installed and operating.

In addition, more advantageously, the flow reducer is simple to manufacture and easy to apply in the discharge line of the condensate generated by a high pressure compressor for the production of breathable air.

Further features and peculiarities of the invention will appear at a greater extent from the description which follows, relating to a preferred embodiment of the flow reducer for adjusting condensate discharge of high pressure compressors, object of the present industrial, given by purely indicative and illustrative, but not limiting, way in relation to the attached drawings in which:
- figure 1 is a schematic and simplified view of the flow reducer of the invention in application conditions;
- figure 2 is an assonometric partial and in vertical section view of the flow reducer of the invention with the valve means in the rest position;
- figure 3 is a vertical section assonometric of the flow reducer of the invention with the valve means in the operating position;
- figure 4 is a vertical section assonometric of a constructive detail of the flow reducer of figures 2 and 3.

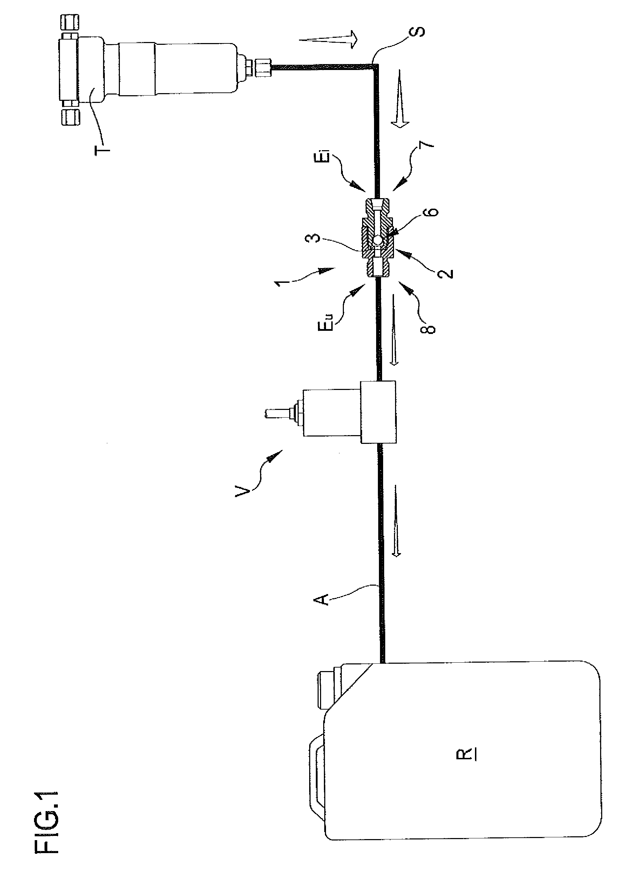

The flow reducer, used for adjusting condensate discharge of the high pressure compressors, is illustrated in figure 1, where it is globally indicated with 1.

In accordance with the invention, the flow reducer 1 comprises:
- a tubular body 2 which mainly develops along a longitudinal axis Z and is coupled downstream a discharge duct S of the condensate, connected with the high pressure compressor (more precisely with the condensate separator or filter with gas under pressure T), in such a way that the inner volume of the tubular body 2 communicates with the inner volume of the discharge duct S;
- an annular strike element 3, arranged within the tubular body 2 and having in the outer wall 3a three surface incisions 4, each of which communicates with the central through hole 5 of the annular strike element 3;
- valve means, overall indicated with 6, contained into the tubular body 2 and suitable to be made axially movable by actuation means within a predetermined linear portion L of the tubular body 2 between at least a rest position, coincident with the phase where discharge of the condensate lacks, in which the valve means 6 are spaced apart by the annular strike element 3, and an operating position, coincident with the phase where discharge of the condensate takes place, in which the valve means 6 are arranged close to the annular strike element 3 in such a way that the surface incisions 4 equally communicate with the inner volume of the tubular body 2 and allow partialized and slowed tapping of the condensate from the discharge duct S towards the outside, more precisely and preferably towards the external container (or tank) of storage R.

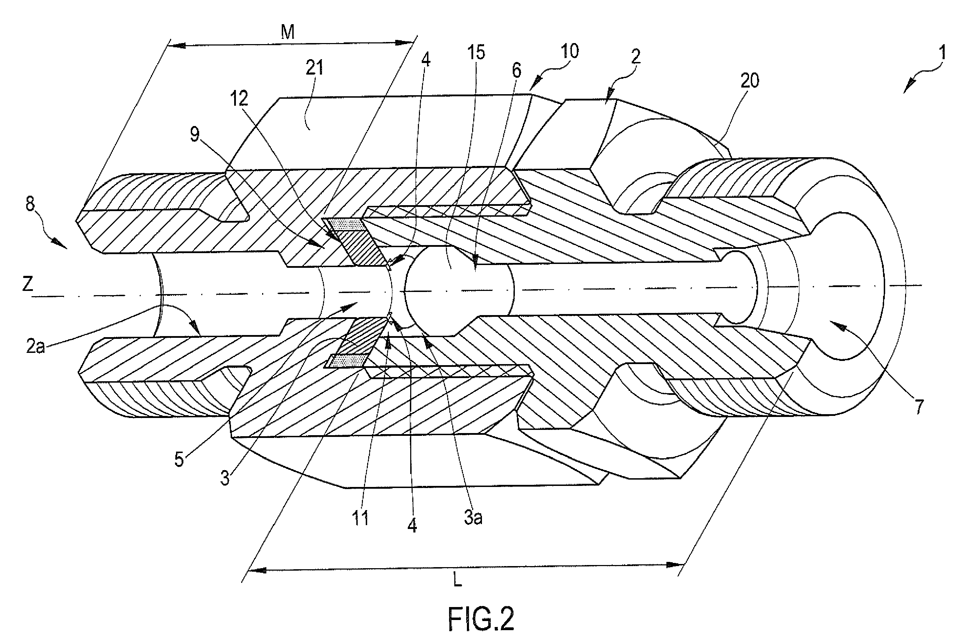

In particular, the tubular body 2 is in this case formed by two tubular portions 20, 21 coaxially coupled each other, between which the annular strike element 3 is interposed, as it is better shown in figures 2-4.

In addition, according to the invention, the tubular body 2 presents an inlet 7 of the condensate, suitable to be conjugated or engaged to the free end Eᵢ of the discharge duct S, and an outlet 8, axially opposed to the inlet 7, suitable to be conjugated or engaged to the free end Eᵤ of an auxiliary duct A that connects the tubular body 2 with the external container of storage R, disposed more downstream in the discharge line.

Preferably but not necessarily, the annular strike element 3 is a distinct and positioned piece with respect to the tubular body 2 and is axially arranged close to an inner shoulder 9 made in the inner wall 2a of the tubular body 2 in such a way that the annular strike element 3 is coaxial to the tubular body 2 itself and blocks the axial stroke of the aforesaid valve means 6. It is understood that in alternative embodiments of the flow reducer of the invention, here not accompanied by drawings of reference, the annular strike element could be monolithic (i.e., formed in one piece) with the tubular body in order to define an inner shoulder which represents the point of axial end-of-stoke of the valve means during the discharge phase of the condensate.

In relation to the annular strike element 3, figures 2-4 show that, in a preferred but not binding way, it is arranged between the intermediate area 10 and the outlet 8 of the tubular body 2.

More in detail, the annular strike element 3 is in this specific case disk-shaped, typically of the washer type, thus defining a first flat face 11, facing the linear section L of the tubular body 2 and, in return, the valve means 6.

The annular strike element 3 also presents a second flat face 12, opposite to the first flat face 11 and frontally arranged close to the inner shoulder 9.

Purely at preferred and non-limitative title, each of the surface incisions 4 presents a depth not exceeding 7 mm and can be simply obtained by retorting the tip of a suitable tool (such as a cut screwdriver having a flat and thin tip) against the outer wall 3a of the annular strike element 3.

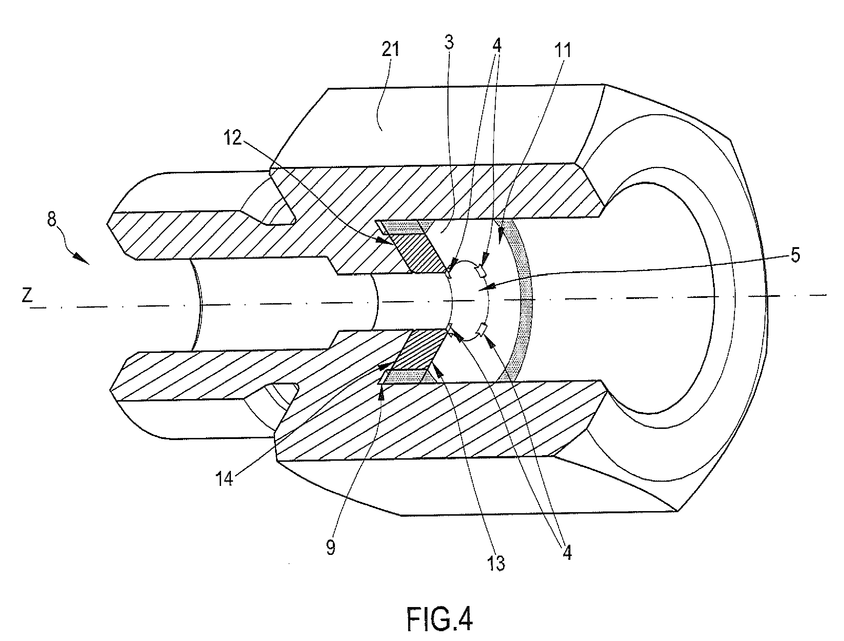

In an appropriate, but not exclusive, manner, moreover, the surface incisions 4 are uniformly distributed along the outer wall 3a of the annular strike element 3 and partly engaging the internal edges 13, 14 facing the central through hole 5 of the annular strike element 3, as better illustrated in figure 4.

More precisely, the three surface incisions 4 are uniformly distributed along the first flat face 11 and along the second flat face 12 of the annular strike element 3, preferably according to the vertices of an equilateral triangle: the uniform distribution of the surface incisions 4 thus allows the creation of an equilibrated and balanced flow of the condensate around the valve means 6 during the phase of discharge from the high pressure compressor.

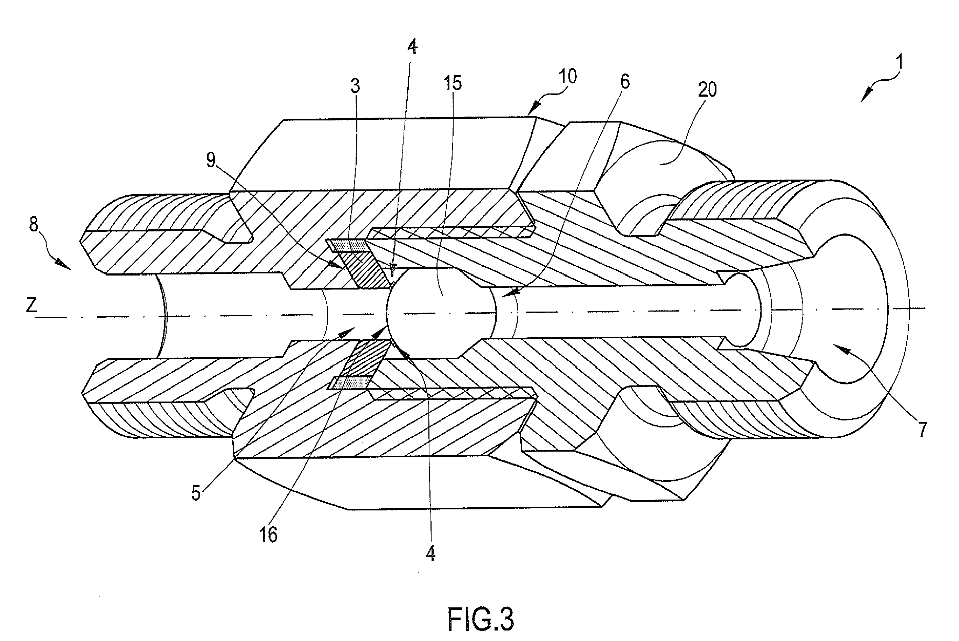

As far as the valve means 6 are concerned, figure 3 shows how, according to the invention, they partially penetrate inside the central through hole 5 of the annular strike element 3 when they assume the operating position, in such a manner that the surface incisions 4 may advantageously continue to communicate with the central through hole 5.

According to the preferred embodiment described herein of the invention, the valve means 6 comprise a sliding insert 15 shaped in such a way as to slide along the longitudinal axis Z only within the linear portion L of the tubular body 2 and still only partly inserted into the central through hole 5 of the annular strike element 3 when the valve means 6 take the operating position.

In particular, the sliding insert 15 preferably takes the form of a rolling ball in such a manner that, when the valve means 6 assume the operating position, it is inserted only with its own spherical cap 16 into the central through hole 5, without obstructing the surface incisions 4. The rolling ball has a diameter slightly lower than the internal diameter of the tubular body 2 in such a way to be free to slide along the longitudinal axis Z, for a maximum stroke equal to the linear portion L, inside the tubular body 2 itself.

In other embodiments of the invention, not represented in the attached drawings, the sliding insert of the valve means could take, for example, a penetrating conical or frustum-conical shape in such a manner that the tapered portion partially penetrates into the central hole of the annular strike element, when the valve means assume the operating position.

Evidently, the actuation means firstly introduced and operating the sliding insert 15 of the valve means 6 conveniently comprise the same high pressure of the condensate coming from the compressor, liberated by the operator by pressing a special regulating valve installed in the compressor itself.

From a functional point of view, the operator obtains the discharge in the external container of storage R of the condensate from the high pressure compressor by intervening, manually or automatically, on a regulating valve V present in the discharge line, interposed between the reducer flow 1 of the invention and the external container of storage R.

The high pressure of the condensate with extreme immediacy pushes the sliding insert 15 (represented in the specific case by a rolling ball) from the initial rest position, in which it is close to the inlet 7, to the operating position of figure 3, in which it is predominantly disposed close to the first flat face 11 of the annular strike element 3.

In the operating position, indeed, the sliding insert 15 is inserted with only the spherical cap 16 into the central through hole 5 of the annular strike element 3, so that the surface incisions 4 continue to communicate, on one side, with the inside of the linear portion L of the tubular body 2 and, on the opposite side, with the inside of the annular strike element 3 and, in return, with the inside of the linear section M (connected with the auxiliary duct A) of the tubular body 2.

In this way, the condensate slowly and then gradually draws through the surface incisions 4 for subsequently going to the auxiliary duct A and from here to the external container of storage R: the flow of the condensate is then largely controlled, contrary to what happens in the known art, with the obvious advantage of allowing the complete discharge of the aqueous part of the condensate before (or at the most at the same time) the discharge of the gaseous part of the condensate itself.

The flow reducer 1 of the invention, thanks to its constructive conception, also allows to dispose any residual impurities which remain in the condensate, for example in the form of oil, and that, during a normal discharge cycle, sometimes accumulate at the surface incisions 4.

Indeed, as soon as the discharge phase is ended, the sliding insert 15 returns to its rest position so that, as the next cycle of discharge of the condensate produced by the high pressure compressor begins, the water of the condensate succeeds in removing these residual impurities, avoiding harmful accumulations on accumulations thereof.

According to the description just given, it is understood, therefore, that the flow reducer for adjusting condensate discharge of high pressure compressors, object of the present invention, achieves the purposes and reaches the advantages previously mentioned.

The flow reducer of the present invention allows to reduce compared to the current state of the art the risk of causing permanent, and sometimes, irreparable damages to the external container of storage, thanks to the fact of adjusting, limiting it, the flow of the condensate during its discharge from the high pressure compressor.

In execution phase, changes could be made to flow reducer of the invention, consisting, for example, in a tubular body having a constructive conception different from that one described above, and detectable with greater detail in the following figures.

Moreover, additional constructive solutions, not illustrated, of the flow reducer of the invention could provide that the annular strike element present a number of surface incisions (or grooves) different from that one used above for the description of the preferred embodiment of the invention, this number being able to vary depending on the requirements or constructive choices starting from one.

In addition, in optional and alternative embodiments of the flow reducer of the invention, yet not shown in the following, the annular strike element could present at least one surface incision which, by construction, communicates with the central through hole in a different way from that one defined above and recoverable from the accompanying figures.

Beyond this, other embodiments of the flow reducer which exclusivity is herein claimed of may exist in which the valve means are of different type from that one specifically identified in the previous portion of this work, which does not affect the advantage brought by the present invention.

It is, finally, clear that several other changes could be made to the flow reducer concerned, without departing from the principle of novelty intrinsic in the inventive idea expressed herein, as it is clear that, in the practical implementation of the invention, materials, shapes and sizes of the illustrated details could be changed, as needed, and replaced with others technically equivalent without departing from the scope of the appended claims.

Where the constructive features and techniques mentioned in the following claims are followed by reference numbers or signs, those reference signs have been introduced with the sole objective of increasing the intelligibility of the claims themselves and therefore they have no limiting effect on the interpretation of each element identified, by way of example only, by these reference signs.

## Claims

1. Flow reducer (1) for adjusting condensate discharge of high pressure compressors comprising:
- a tubular body (2) which extends mainly along a longitudinal axis (Z) and:
• is suitable to be coupled downstream a discharge duct (S) of said condensate, connected with said high pressure compressor, in such a way that the inner volume of said tubular body (2) communicates with the inner volume of said discharge duct (S);
• presents an inlet (7) of said condensate, suitable to be conjugated to the free end (Eᵢ) of said discharge duct (S), and an outlet (8), axially opposed to said inlet (7), suitable to be conjugated to the free end (Eᵤ) of an auxiliary duct (A) for the connection with an external storage container (R);
- an annular strike element (3), arranged within said tubular body (2) **characterized in that** the annular strike element (3) has in an outer wall (3a) oriented towards said inlet (7) of said tubular body (2) at least one surface incision (4) facing to and directly communicating with the central through hole (5) of said annular strike element (3);
and **in that** the flow reducer (1) further comprises
- valve means (6), contained into said tubular body (2) and suitable to be made axially movable by actuation means within a linear section (L) of said tubular body (2) between at least one rest position, coincident with the phase where discharge of said condensate is absent, in which said valve means (6) are spaced apart by said annular strike element (3), and an operating position, coincident with the phase where discharge of said condensate takes place, in which said valve means (6) are arranged close to said annular strike element (3) and artiall penetrate into said central through hole (5) of said annular strike element (3) in such a manner that said surface incision (4) continues to communicate with the inner volume of said tubular body (2) and allows partialized dispensing of said condensate from said discharge duct (S) towards said external storage container (R).

2. Reducer (1) according to claim 1) **characterized in that** said annular strike element (3) is a separate and positioned piece with respect to said tubular body (2) and is axially arranged close to an inner shoulder (9) made in the inner wall (2a) of said tubular body (2) in such a manner that said annular strike element (3) is coaxial to said tubular body (2) and blocks the axial stroke of said valve means (6).

3. Reducer according to claim 1) **characterized in that** said annular strike element is monolithic with said tubular body, and defines an inner shoulder which represents the axial end-of-stroke point of said valve means.

4. Reducer (1) according to any of the claims 1) to 3) **characterized in that** said annular strike element (3) is arranged between the intermediate area (10) and said outlet (8) of said tubular body (2).

5. Reduce (1) according to any of the claims 2) to 4) **characterized in that** said annular strike element (3) is disk-shaped and defines a first flat face (11), facing said linear section (L) of said tubular body (2) and said valve means (6), and a second flat face (12), opposed to said first flat face (11) and frontally arranged close to said inner shoulder (9).

6. Reducer (1) according to any of the preceding claims **characterized in that** said surface incision (4) presents a depth not exceeding 7 mm.

7. Reducer (1) according to any of the preceding claims **characterized in that** said annular strike element (3) presents a plurality of surface incisions (4) evenly distributed along said outer wall (3a) of said annular strike element (3) and partially engaging the internal edges (13, 14) facing said central through hole (5) of said annular strike element (3).

8. Reducer (1) according to claim. 7) **characterized in that** said surface incisions (4) for each of said flat faces (11, 12) are three in number arranged at the vertices of an equilateral triangle.

9. Reducer (1) according to any of the preceding claims **characterized in that** said valve means (6) comprise a sliding insert (15) shaped in such a way as to slide along said longitudinal axis (Z) and for said linear section (L) of said tubular body (2) and to partially insert itself into said central through hole (5) of said annular strike element (3).

10. Reducer (1) according to claim 2) **characterized in that** said sliding insert (15) takes the form of a rolling ball in such a way that, when said valve means (6) assume said operating position, said rolling ball is inserted with only a spherical cap (16) into said central through hole (5) without obstructing said surface incision (4).

## Patentansprüche

1. Durchflussreduzierer (1) zum Einstellen der Kondensatabgabe von Hochdruckkompressoren, umfassend:
- einen röhrenförmigen Körper (2), der sich hauptsächlich entlang einer Längsachse (Z) erstreckt und:
• dafür geeignet ist, stromabwärts einer Abgabeleitung (S) für das Kondensat, welche mit dem Hochdruckkompressor verbunden ist, angeschlossen zu werden, so dass das Innenvolumen des röhrenförmigen Körpers (2) mit dem Innenvolumen der Abgabeleitung (S) in Verbindung steht,
• einen Einlass (7) für das Kondensat aufweist, der dafür geeignet ist, dem freien Ende (Eᵢ) der Abgabeleitung (S) zugeordnet zu werden, und einen Auslass (8) aufweist, welcher dem Einlass (7) axial entgegengesetzt ist und dafür geeignet ist, dem freien Ende (Eᵤ) einer Hilfsleitung (A) zur Verbindung mit einem äußeren Speicherbehälter (R) zugeordnet zu werden,
- ein ringförmiges Anschlagselement (3), das innerhalb des röhrenförmigen Körpers (2) angeordnet ist, **dadurch gekennzeichnet, dass** das ringförmige Anschlagselement (3) in einer Außenwand (3a), welche zum Einlass (7) des röhrenförmigen Körpers (2) orientiert ist, wenigstens einen Oberflächeneinschnitt (4) aufweist, welcher dem zentralen Durchgangsloch (5) des ringförmigen Anschlagselements (3) gegenübersteht und direkt damit in Verbindung steht,
und dass der Durchflussreduzierer (1) ferner Folgendes umfasst:
- Ventilmittel (6), die in den röhrenförmigen Körper (2) aufgenommen sind und dafür geeignet sind, durch Betätigungsmittel innerhalb eines linearen Abschnitts (L) des röhrenförmigen Körpers (2) zwischen wenigstens einer Ruheposition, die mit der Phase übereinstimmt, wo das Kondensat nicht abgegeben wird, worin die Ventilmittel (6) durch das ringförmige Anschlagselement (3) beabstandet sind, und einer Betätigungsposition, die mit der Phase übereinstimmt, wo die Abgabe des Kondensats stattfindet, wobei die Ventilmittel (6) in der Nähe des ringförmigen Anschlagselements (3) angeordnet sind und teilweise in das zentrale Durchgangsloch (5) des ringförmigen Anschlagselements (3) eindringen, so dass der Oberflächeneinschnitt (4) weiter mit dem Innenvolumen des röhrenförmigen Körpers (2) in Verbindung steht und eine teilweise Abgabe des Kondensats von der Abgabeleitung (S) zum äußeren Speicherbehälter (R) ermöglicht, axial beweglich gemacht zu werden.

2. Reduzierer (1) nach Anspruch 1, **dadurch gekennzeichnet, dass** das ringförmige Anschlagselement (3) ein in Bezug auf den röhrenförmigen Körper (2) getrenntes und positioniertes Stück ist und axial in der Nähe einer inneren Schulter (9) angeordnet ist, die in der Innenwand (2a) des röhrenförmigen Körpers (2) ausgebildet ist, so dass das ringförmige Anschlagselement (3) mit dem röhrenförmigen Körper (2) koaxial ist und den axialen Hub der Ventilmittel (6) blockiert.

3. Reduzierer nach Anspruch 1, **dadurch gekennzeichnet, dass** das ringförmige Anschlagselement mit dem röhrenförmigen Körper monolithisch ist und eine innere Schulter definiert, welche den axialen Hubendpunkt der Ventilmittel repräsentiert.

4. Reduzierer (1) nach einem der Ansprüche 1 bis 3, **dadurch gekennzeichnet, dass** das ringförmige Anschlagselement (3) zwischen dem Zwischenbereich (10) und dem Auslass (8) des röhrenförmigen Körpers (2) angeordnet ist.

5. Reduzierer (1) nach einem der Ansprüche 2 bis 4, **dadurch gekennzeichnet, dass** das ringförmige Anschlagselement (3) scheibenförmig ist und eine erste ebene Fläche (11), welche dem linearen Abschnitt (L) des röhrenförmigen Körpers (2) und der Ventilmittel (6) gegenübersteht, und eine zweite ebene Fläche (12), welche der ersten ebenen Fläche (11) gegenübersteht und frontal in der Nähe der inneren Schulter (9) angeordnet ist, definiert.

6. Reduzierer (1) nach einem der vorhergehenden Ansprüche, **dadurch gekennzeichnet, dass** der Oberflächeneinschnitt (4) eine Tiefe aufweist, die 7 mm nicht überschreitet.

7. Reduzierer (1) nach einem der vorhergehenden Ansprüche, **dadurch gekennzeichnet, dass** das ringförmige Anschlagselement (3) mehrere Oberflächeneinschnitte (4) aufweist, die gleichmäßig entlang der Außenwand (3a) des ringförmigen Anschlagselements (3) verteilt sind und teilweise in die Innenkanten (13, 14) eingreifen, welche dem zentralen Durchgangsloch (5) des ringförmigen Anschlagselements (3) gegenüberstehen.

8. Reduzierer (1) nach Anspruch 7, **dadurch gekennzeichnet, dass** drei der Oberflächeneinschnitte (4) für jede der ebenen Flächen (11, 12) an den Scheitelpunkten eines gleichseitigen Dreiecks angeordnet sind.

9. Reduzierer (1) nach einem der vorhergehenden Ansprüche, **dadurch gekennzeichnet, dass** die Ventilmittel (6) einen gleitenden Einsatz (15) umfassen, der geformt ist, um entlang der Längsachse (Z) und für den linearen Abschnitt (L) des röhrenförmigen Körpers (2) zu gleiten und teilweise in das zentrale Durchgangsloch (5) des ringförmigen Anschlagselements (3) einzutreten.

10. Reduzierer (1) nach Anspruch 9, **dadurch gekennzeichnet, dass** der gleitende Einsatz (15) die Form einer rollenden Kugel annimmt, so dass, wenn die Ventilmittel (6) die Betätigungsposition annehmen, die rollende Kugel nur mit einer kugelförmigen Kappe (16) in das zentrale Durchgangsloch (5) eingeführt wird, ohne den Oberflächeneinschnitt (4) zu blockieren.

## Revendications

1. Réducteur de débit (1) permettant de régler le refoulement de condensat de compresseurs haute pression, comprenant :
- un corps tubulaire (2) qui s'étend principalement le long d'un axe longitudinal (Z) et :
• est approprié pour être couplé en aval d'une conduite de refoulement (S) dudit condensat, reliée audit compresseur haute pression, d'une manière telle sorte le volume interne dudit corps tubulaire (2) communique avec le volume interne de ladite conduite de refoulement (S) ;
• présente une entrée (7) dudit condensat, appropriée pour être conjuguée à l'extrémité libre (Ei) de ladite conduite de refoulement (S), et une sortie (8), axialement opposée à ladite entrée (7), appropriée pour être conjuguée à l'extrémité libre (Eu) d'une conduite auxiliaire (A) pour le raccordement à un récipient de stockage externe (R) ;
- un élément de butée annulaire (3) agencé à l'intérieur dudit corps tubulaire (2),
**caractérisé par le fait que** l'élément de butée annulaire (3) a, dans une paroi externe (3a) orientée vers ladite entrée (7) dudit corps tubulaire (2), au moins une incision de surface (4) faisant face au et communiquant directement avec le trou traversant central (5) dudit élément de butée annulaire (3) ;
et **par le fait que** le réducteur de débit (1) comprend en outre :
- des moyens formant valve (6), contenus dans ledit corps tubulaire (2) et appropriés pour être rendus axialement mobiles par des moyens d'actionnement à l'intérieur d'une section linéaire (L) dudit corps tubulaire (2) entre au moins une position de repos, coïncidant avec la phase où le refoulement dudit condensat est absent, dans laquelle lesdits moyens formant valve (6) sont espacés par ledit élément de butée annulaire (3), et une position de fonctionnement, coïncidant avec la phase où le refoulement dudit condensat se produit, dans laquelle lesdits moyens formant valve (6) sont disposés proches dudit élément de butée annulaire (3) et pénètrent partiellement dans ledit trou traversant central (5) dudit élément de butée annulaire (3) d'une manière telle que ladite incision de surface (4) continue de communiquer avec le volume interne dudit corps tubulaire (2) et autorise une distribution partielle dudit condensat dudit conduit de refoulement (S) vers ledit récipient de stockage externe (R).

2. Réducteur (1) selon la revendication 1, **caractérisé par le fait que** ledit élément de butée annulaire (3) est une pièce distincte et positionnée par rapport audit corps tubulaire (2) et est axialement proche d'un épaulement interne (9) formé dans la paroi interne (2a) dudit corps tubulaire (2) d'une manière telle que ledit élément de butée annulaire (3) est coaxial audit corps tubulaire (2) et bloque la course axiale desdits moyens formant valve (6).

3. Réducteur selon la revendication 1, **caractérisé par le fait que** ledit élément de butée annulaire est d'une seule pièce avec ledit corps tubulaire, et définit un épaulement interne qui représente le point de fin de course axiale desdits moyens formant valve.

4. Réducteur (1) selon l'une quelconque des revendications 1 à 3, **caractérisé par le fait que** ledit élément de butée annulaire (3) est disposé entre la zone intermédiaire (10) et ladite sortie (8) dudit corps tubulaire (2).

5. Réducteur (1) selon l'une quelconque des revendications 2 à 4, **caractérisé par le fait que** ledit élément de butée annulaire (3) est en forme de disque et définit une première face plate (11), faisant face à ladite section linéaire (L) dudit corps tubulaire (2) et auxdits moyens formant valve (6), et une seconde face plate (12), opposée à ladite première face plate (11) et disposée de face à proximité dudit épaulement interne (9).

6. Réducteur (1) selon l'une quelconque des revendications précédentes, **caractérisé par le fait que** ladite incision de surface (4) présente une profondeur ne dépassant pas 7 mm.

7. Réducteur (1) selon l'une quelconque des revendications précédentes, **caractérisé par le fait que** ledit élément de butée annulaire (3) présente une pluralité d'incisions de surface (4) réparties uniformément le long de ladite paroi externe (3a) dudit élément de butée annulaire (3) et engageant partiellement les bords internes (13, 14) faisant face audit trou traversant central (5) dudit élément de butée annulaire (3).

8. Réducteur (1) selon la revendication 7, **caractérisé par le fait que** lesdites incisions de surface (4) pour chacune desdites faces plates (11, 12) sont au nombre de trois et disposées aux sommets d'un triangle équilatéral.

9. Réducteur (1) selon l'une quelconque des revendications précédentes, **caractérisé par le fait que** lesdits moyens formant valve (6) comprennent un insert coulissant (15) formé de façon à coulisser le long dudit axe longitudinal (Z) et pour ladite section linéaire (L) dudit corps tubulaire (2) et à s'introduire partiellement lui-même dans ledit trou traversant central (5) dudit élément de butée annulaire (3).

10. Réducteur (1) selon la revendication 9, **caractérisé par le fait que** ledit insert coulissant (15) prend la forme d'une bille roulante d'une manière telle que, lorsque lesdits moyens formant valve (6) adoptent ladite position de fonctionnement, ladite bille roulante est introduite avec uniquement une calotte sphérique (16) dans ledit trou traversant central (5) sans obturer ladite incision de surface (4).
